# EUROPEAN PATENT APPLICATION

(11) **EP 4 436 221 A1**
(43) Date of publication of application: **25.09.2024**
(21) Application number: 22900209.2
(22) Date of filing: 04.11.2022
(51) Int. Cl.: H04W 4/24

(54) **USER PLANE POLICY AUTHORIZATION METHOD, NETWORK ELEMENT, ELECTRONIC DEVICE, AND STORAGE MEDIUM**

(30) Priority: 03.12.2021 CN 202111467645
(71) Applicant: ZTE Corporation, Shenzhen, Guangdong 518057 (CN)
(72) Inventor: CHEN, Gang, Shenzhen, Guangdong 518057 (CN); NA, Jingwei, Shenzhen, Guangdong 518057 (CN); HU, Zhen, Shenzhen, Guangdong 518057 (CN)
(74) Representative: Osterhoff, Utz
(86) International application number: PCT/CN2022/130058
(87) International publication number: WO 2023/098404

(57) **Abstract**

Embodiments of the present application relate to the technical field of communication and disclose a user plane policy authorization method, a network element, an electronic device and a storage medium. The method includes: (201), acquiring an identity of a policy control function (PCF) network element from the session management function (SMF) network element; (202), establishing an association session with the PCF network element according to the identity of the PCF network element; and (203), reporting user plane usage information to the PCF network element through the association session, and receiving the user plane policy fed back based on the user plane usage information from the PCF network element through the association session.

## Description

### CROSS-REFERENCES TO RELATED APPLICATIONS

The present application claims priority to Chinese Patent Application NO. 202111467645.2, filed on December 3, 2021.

### TECHNICAL FIELD

The present application relates to the technical field of communication, and in particular to a user plane policy authorization method, a network element, an electronic device and a storage medium.

### BACKGROUND

When 5G networks are widely used, there will be more and more demands for time sensitive networking (TSN). Many applications require low latency, high bandwidth, deterministic latency and low jitter to efficiently handle a variety of applications within a tolerable latency range.

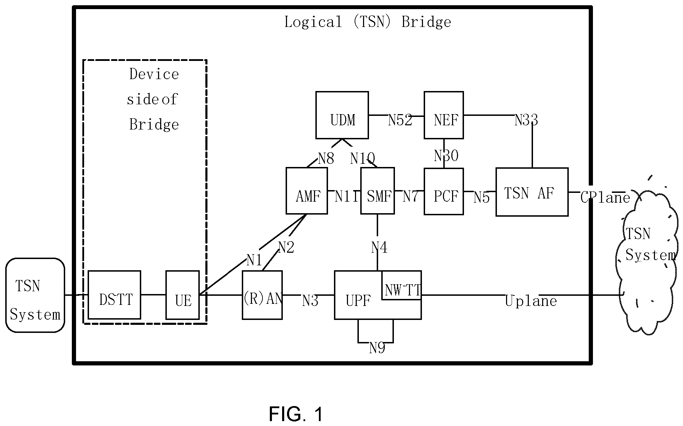

The 5GS network is integrated into the TSN network as a TSN bridge. As shown in FIG. 1, the user equipment (UE) and UPF are two ports of this bridge. The user equipment side port is managed by the device-side TSN translator (DS-TT), the user side port is managed by the network-side TSN translator (NW-TT), and these two ports need to adapt to TSN capabilities. TSN application function (AF), as a part of 5GS, provides the control plane conversion function to access the TSN network.

However, in the above network architecture, the interaction between the policy control function (PCF) and the user plane function (UPF) needs to be forwarded by other network elements, which increases the path for information transmission, increases the load between systems and also increases the processing time of business applications. In particular, for TSN, which requires high latency and certainty, it is very important to reduce the latency of application control and processing. Therefore, 5GS networks have problems such as large application control and processing latency, multiple information transmission paths, and heavy load between systems.

### SUMMARY

In order to solve the above problems, the present application provides a user plane policy authorization method, a network element, an electronic device and a storage medium, and solves the problems of large application control and processing latency, multiple information transmission paths and heavy load between systems.

In order to solve the above problems, embodiments of the present application provide a user plane policy authorization method, which is applied to a user plane function (UPF) network element. The method includes: acquiring an identity of a policy control function (PCF) network element from a session management function (SMF) network element; establishing an association session with the PCF network element according to the identity of the PCF network element; and reporting user plane usage information to the PCF network element through the association session, and receiving a user plane policy fed back based on the user plane usage information from the PCF network element through the association session.

In order to solve the above problems, embodiments of the present application provide a user plane policy authorization method, applied to a policy control function (PCF) network element. The method includes: receiving an association session establishment request initiated by a user plane function (UPF) network element, and establishing an association session with the UPF network element; receiving user plane usage information reported by the PCF network element through the association session; and delivering a user plane policy fed back based on the user plane usage information to the PCF network element through the association session.

In order to solve the above problems, embodiments of the present application provide a user plane function (UPF) network element, including: an acquisition module, configured to acquire an identity of a policy control function (PCF) network element from a session management function (SMF) network element; an establishment module, configured to establish an association session with the PCF network element according to the identity of the PCF network element; and a transmission module, configured to report user plane usage information to the PCF network element through the association session, and receive a user plane policy fed back based on the user plane usage information from the PCF network element through the association session.

In order to solve the above problems, embodiments of the present application provide a policy control function (PCF) network element, including: an establishment module, configured to receive an association session establishment request initiated by a user plane function (UPF) network element, and establish an association session with the UPF network element; a receiving module, configured to receive user plane usage information reported by the PCF network element through the association session; and a feedback module, configured to deliver a user plane policy fed back based on the user plane usage information to the PCF network element through the association session.

In order to solve the above problems, embodiments of the present application provide an electronic device, including: at least one processor; and a memory communicated with the at least one processor. An instruction executable by the at least one processor is stored in the memory and is executed by the at least one processor to allow the at least one processor to perform the user plane policy authorization method as described above, or to perform the user plane policy authorization method as described above.

In order to solve the above problems, embodiments of the present application provide a computer-readable storage medium, a computer program is stored in the computer-readable storage medium. When the computer program is executed by a processor, the user plane policy authorization method as described above is implemented, or the user plane policy authorization method as described above is implemented.

### BRIEF DESCRIPTION OF THE DRAWINGS

One or more embodiments are exemplified by the corresponding drawings, and these illustrative description do not constitute limitations to the embodiments. Elements with the same reference signs in the drawings are represented as similar elements. Unless otherwise stated, the figures in the drawings are not intended to be limited to scale.
FIG. 1 is a time sensitive networking (TSN) networking diagram of 5GS as a TSN switch provided by related technologies.
FIG. 2 is a flow chart of a user plane policy authorization method applied to a user plane function (UPF) network element provided by an embodiment of the present application.
FIG. 3 is a flow chart of a user plane policy authorization method applied to a policy control function (PCF) network element provided by an embodiment of the present application.
FIG. 4 is a flow chart for establishing an association session between the UPF network element and the PCF network element provided by an embodiment of the present application.
FIG. 5 is a flow chart of user plane quality of service (QoS) policy authorization provided by an embodiment of the present application.
FIG. 6 is a flow chart of user plane usage monitoring policy processing provided by an embodiment of the present application.
FIG. 7 is a flow chart of user plane TSN delay change processing provided by an embodiment of the present application.
FIG. 8 is a schematic structural diagram of a UPF network element provided by an embodiment of the present application.
FIG. 9 is a schematic structural diagram of a PCF network element provided by an embodiment of the present application.
FIG. 10 is a schematic diagram of an electronic structure provided by an embodiment of the present application.

### DETAILED DESCRIPTION OF THE EMBODIMENTS

In order to make the purpose, technical solutions and advantages of embodiments of the present application clearer, the embodiments of the present application will be described in detail below in conjunction with the accompanying drawings. However, those skilled in the art can understand that in each embodiment of the present application, many technical details are provided to enable readers to better understand the present application. However, even without these technical details and various changes and modifications based on the following embodiments, the technical solution claimed in the present application can also be implemented.

The embodiment of the present application relates to a user plane policy authorization method applied to a user plane function (UPF) network element.

The method includes: acquiring an identity of a policy control function (PCF) network element from a session management function (SMF) network element; establishing an association session with the PCF network element according to the identity of the PCF network element; and reporting user plane usage information to the PCF network element through the association session, and receiving a user plane policy fed back based on the user plane usage information from the PCF network element through the association session. The method reduces the information transfer path, reduces the load between systems, reduces the processing time of business applications, and improves the user experience.

The network architecture of the embodiment of the present application mainly involves the PCF network element, the SMF network element, an application function (AF) network element, the UPF network element, and the network repository function (NRF).

The PCF network element is responsible for quality of service (QoS) charging and access mobility policy control.

The SMF network element supports the establishment, modification and release of 3GPP and Non-3GPP sessions, is responsible for the allocation and management of internet protocol (IP) addresses for interconnection between user networks, and controls implementation and termination of the policy uniformly.

The AF network element can request policy authorization from the PCF for specific service flows, establish an N5 session with PCF, and provide the PCF with traffic information and policy requirements (QoS, routing, etc.) required for policy authorization through the session.

The UPF network element is used for data packet routing and forwarding, business detection, usage accumulation and reporting, data message transmission and replication, and QoS guarantee.

The NRF is used to receive registration information of service providers for service users to discover the service providers.

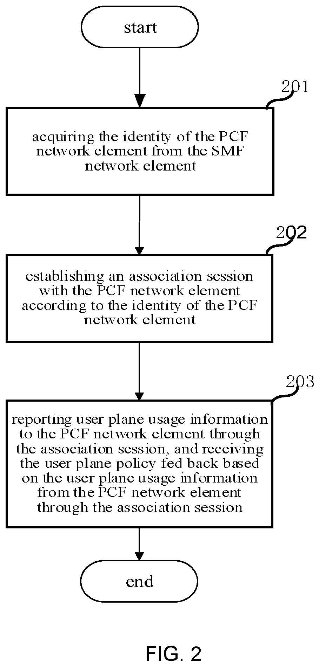

The implementation details of the user plane policy authorization method in this embodiment are described in detail below. The following content is only for convenience in understanding the implementation details of this solution and is not necessary for implementing this solution. The specific process is shown in FIG. 2, which can include the following steps.

Step 201, acquiring the identity of the PCF network element from the SMF network element.

Specifically, the PCF network element receives the N4 session establishment request initiated by the SMF network element, and parses the N4 session establishment request to obtain the identity of the PCF network element. The N4 session establishment request carries the identity of the PCF network element.

In an example, when the UPF network element creates an N4 session with the SMF network element, the UPF network element acquires the PCF identity selected by the SMF network element. The PCF network element is used for subsequent direct communication between the UPF network element and the PCF network element.

Step 202, establishing an association session with the PCF network element according to the identity of the PCF network element.

Specifically, the identity of the PCF network element is sent to the NRF, so that the NRF can query the IP address of the PCF network element based on the identity of the PCF network element; link establishment information of the PCF network element is received from the feedback of the NRF network element, and the association session with the PCF network element is established according to the link establishment information of the PCF network element. The link establishment information includes: fully qualified domain name (FQDN), IP address, port and other information.

In an example, the UPF network element acquires the identity of the PCF network element according to the corresponding relationship between the identity of the PCF network element and the link establishment information stored in the NRF network element, and then establishes the association session with the PCF network element according to the link establishment information of the PCF network element.

In addition, the link establishment information of the PCF network element corresponding to the identity is queried in the local configuration information according to the identity of the PCF network element; and the association session with the PCF network element is established according to the queried link establishment information. The local configuration information includes: the corresponding relationship between the link establishment information of the PCF network element and the identity of the PCF network element.

In an example, the corresponding relationship between the identity and the link establishment information of the PCF network element is stored in the local configuration information in advance. After acquiring the identity of the PCF network element, the UPF network element acquires the link establishment information of the PCF network element according to the corresponding relationship in the local configuration information, thereby establishing the association session with the PCF network element.

A user plane association session is established between the UPF network element and the PCF network element, which facilitates the PCF network element to directly deliver or adjust the policy to the UPF network element, avoiding the problem of too long information transmission paths in existing standards.

Step 203, reporting user plane usage information to the PCF network element through the association session, and receiving a user plane policy fed back based on the user plane usage information from the PCF network element through the association session.

In an example, after detecting the occurrence of an application, the UPF network element reports the user plane usage information to the PCF network element, and the PCF network element decides the user plane policy for the application according to the user plane usage information and sends the user plane decision to the UPF network element for execution.

In an embodiment, the user plane usage information includes one of the following or any combination thereof: application occurrence information, usage accumulation information, time-sensitive communication TSN delay parameter information. The fed back user plane policy includes one of the following or any combination thereof: QoS policy, usage monitoring policy, and delay critical policy.

In addition, if the PCF network element delivers the usage shard policy of the application to the UPF network element, when the UPF network element detects that the amount of the usage shard is used up, it reports the application amount to the PCF network element, and the PCF network element makes a new decision according to the usage situation, adjusts the QoS policy, usage monitoring policy, etc. and then delivers them to the UPF network element.

In an embodiment, after receiving the user plane usage information reported by the UPF network element, the PCF network element can also make interactive decisions with other network elements. For example, in TSN networking, when the UPF network element detects changes in parameters such as the delay of the NW-TT port, it reports the TSN delay and other parameters to the PCF network element and initiates a policy update request. The PCF network element reports TSN delay and other parameters to the CNC network element through TSN-AF. The CNC network element makes a comprehensive decision to select the NW-TT port list that meets the application delay requirements, and delivers the above NW-TT port list to the UPF network element through the PCF network element. By interacting with other network elements for decision-making, the application policy required by the UPF network element can be decided more quickly and effectively.

In the user plane policy authorization method provided by the embodiments of the present application, the UPF network element establishes the association session with the PCF network element according to the acquired identity of the PCF network element, so that the UPF network element can report the user plane usage information to the PCF network element, which realizes the direct interaction between the UPF network element and the PCF network element, reduces the information transmission path, reduces the load between systems, reduces the processing time of business applications, effectively improves the business application processing capabilities of the 5GS system, and improves user's business experience, achieving the purpose of quickly acquiring the required application policy.

Embodiments of the present application also relate to a user plane policy authorization method applied to PCF. The method includes: receiving an association session establishment request initiated by the UPF network element, and establishing an association session with the UPF network element; receiving the user plane usage information reported by the PCF network element through the association session; and delivering a user plane policy fed back based on the user plane usage information to the PCF network element through the association session.

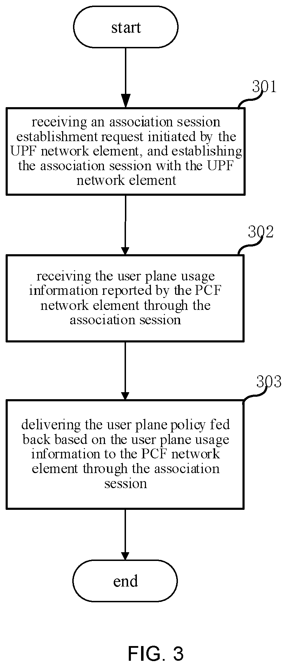

The implementation details of the method in this embodiment are described in detail below. The following content is only for the convenience of understanding the implementation details of this solution and is not necessary for implementing this solution. The specific process is shown in FIG. 3, which can include the following steps.

Step 301, receiving an association session establishment request initiated by the UPF network element, and establishing the association session with the UPF network element.

Specifically, the PCF network element receives the association session establishment request initiated by the UPF network element; and the PCF network element sends an association session establishment response to the UPF network element. The association session establishment response carries the monitoring policy for the UPF network element to report user plane usage information based on the monitoring policy.

In an example, the PCF network element responds to the user plane association session establishment response and carries the monitoring policy of the relevant application. The monitoring policy includes: the application to be monitored and the monitoring QoS information and other policies. After the UPF network element receives the monitoring policy of the application, it executes the monitoring policy.

Step 302, receiving the user plane usage information reported by the PCF network element through the association session.

Step 303, delivering the user plane policy fed back based on the user plane usage information to the PCF network element through the association session.

In an example, the PCF network element determines the most appropriate user plane policy according to the received user plane usage information for the UPF gateway to execute.

In the user plane policy authorization method in the embodiment of this application, the user plane usage information uploaded by the UPF network element is directly received through the association session created with the UPF network element, and the user plane policy is delivered for the user plane to execute, and after receiving the user plane usage information reported by the UPF network element, the PCF network element can quickly determine the application policy required by the UPF network element through making independent decisions or interacting with network elements, which reduces the information transmission path, reduces the load between systems, and reduces the processing time of business applications. This can effectively improve the business application processing capabilities of the 5GS system and improve the user's business experience.

In order to make the implementation process of the user plane policy authorization method in the embodiment of the present application more concise, the steps in the user plane policy authorization method will be described in detail through four interactive flow charts.

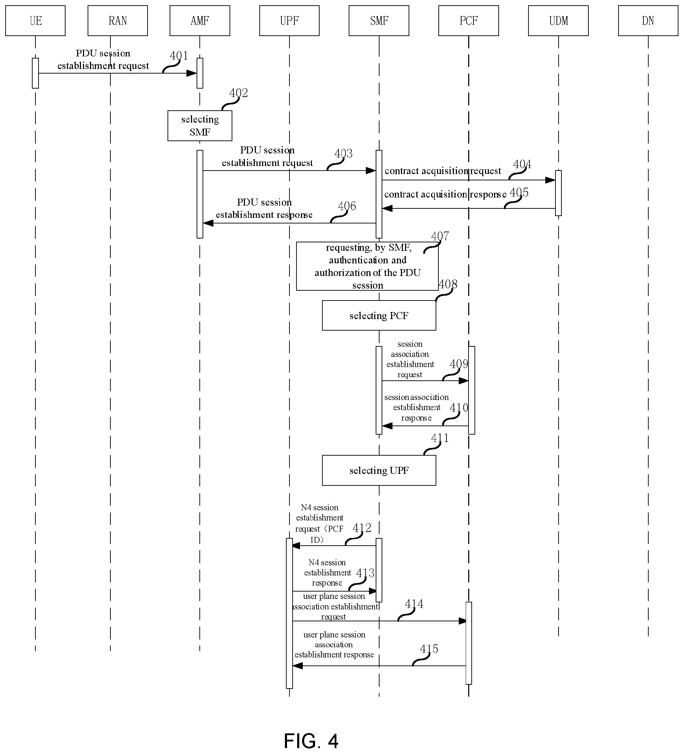

In an example, the process for establishing the association session between the UPF network element and the PCF network element is shown in FIG. 4. The specific steps are as follows.

Step 401, initiating, by a protocol data unit (PDU), a session establishment request, carrying parameters such as user number, data network name, slice, PDU session identity and request type.

Step 402, selecting, by a mobility management function (AMF) network element, the SMF according to parameters such as slice and data network name.

Step 403, initiating, by the AMF network element, a PDU session establishment request to the SMF network element, carrying information such as user number, data network name, slice, PDU session identity, user position, wireless access type, and anchored PCF number.

Step 404, initiating, by the SMF network element, a contract query to the UDM network element, carrying information such as user identity, slice, and data network name.

Step 405, returning, by the UDM network element, contract-related information, such as allowed PDU session types, session service continuity mode, default 5QI/address resolution protocol (ARP), contracted session aggregate maximum bit rate and other parameters.

Step 406, replying, by the SMF network element, to the AMF network element with a PDU session establishment response.

Step 407, requesting, by the SMF network element, authentication and authorization of the PDU session from the AAA server.

Step 408, selecting, by the SMF network element, a PCF according to the PCF identity or user identity, slice, data network name, etc.

Step 409, initiating, by the SMF network element, a session association establishment request to the PCF network element, carrying parameters such as user number, data network name, slice, PDU session identity, request type, default 5QI/ARP, and contracted session aggregate maximum bit rate.

Step 410, replying, by the PCF network element, to the SMF network element with a session policy association establishment response.

Step 411, selecting, by the SMF network element, a UPF according to the policy delivered by the PCF network element or the local policy.

Step 412, initiating, by the SMF network element, an N4 session establishment request to the UPF network element, carrying parameters such as PCF ID.

Step 413, replying, by the UPF network element, to the SMF network element with an N4 session establishment response.

Step 414, acquiring, by the UPF network element, the PCF address from the NRF network element (or local configuration) according to the PCF ID, and initiating a user plane session policy association establishment request to the PCF network element.

Step 415, replying, by the PCF network element, to the UPF network element with a user plane session association establishment response.

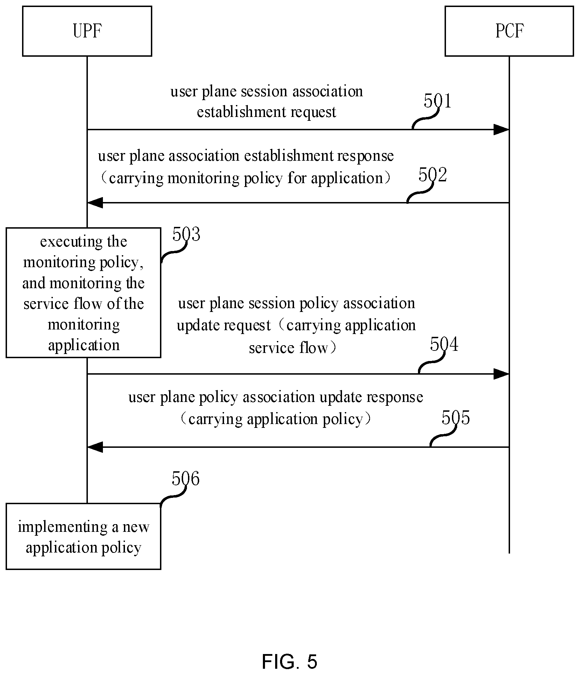

In an example, the user plane QoS policy authorization process is shown in FIG. 5. The specific process is as follows.

Step 501, initiating, by the UPF network element, a user plane session association establishment request to the PCF network element, carrying parameters such as user number, data network name, slice and IP address.

Step 502, replying, by the PCF network element, with a user plane association establishment response, carrying monitoring policies for related applications, including policies for applications to be monitored and monitoring QoS information.

Step 503, executing, the UPF network element, the monitoring policy and monitoring the service flow of the monitoring application on the user plane, after receiving the monitoring policy of the application.

Step 504, initiating, by the UPF network element, a user plane session policy association update request to the PCF network element, carrying information such as monitoring application service flows and requesting QoS.

Step 505, replying, by the PCF network element, with the user plane policy association update response, carrying application-related policies such as QoS policies and gating policies.

Step 506, implementing, by the UPF network element, a new QoS and gating policy.

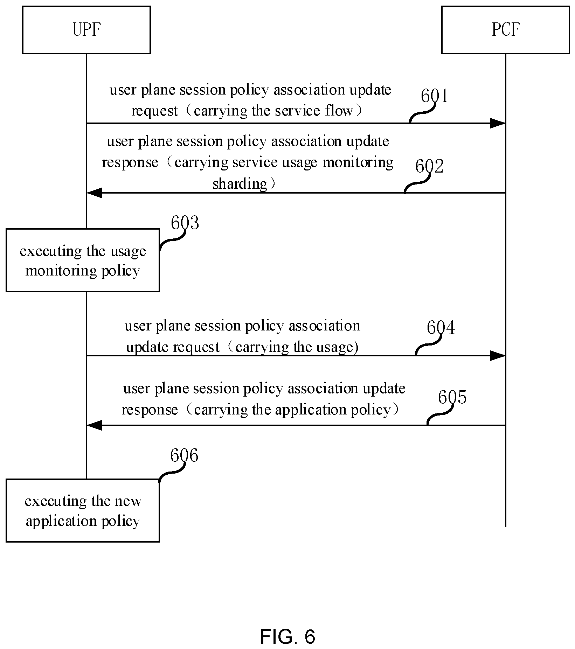

In an example, the user plane usage monitoring policy processing flow is shown in FIG. 6. The specific process is as follows.

Step 601, initiating, by the UPF network element, the user plane session policy association update request to the PCF network element, carrying the service flow.

Step 602, replying, by the PCF network element, with a user plane policy association update response, carrying QoS rules, gating, service flow diversion, and business usage monitoring sharding rules. The business usage monitoring rule parameters include traffic, duration, and number of clicks, etc.

Step 603, executing, by the UPF network element, the usage monitoring policy and starts accumulating service usage.

Step 604, when the service usage accumulated by the UPF network element reaches the usage shard threshold, initiating a user plane session policy association update request to the PCF network element, carrying the usage.

Step 605, when the PCF network element receives the usage information and the cumulative usage exceeds the predetermined threshold, that is, the usage monitoring rule, replying, by the PCF network element, with a user plane policy association update response, carrying the application policy of the decision, such as QoS rules, gating, service flow diversion and usage monitoring and other policies.

Step 606, executing the new QoS rules, gating policies, service flow diversion, usage monitoring and other policies.

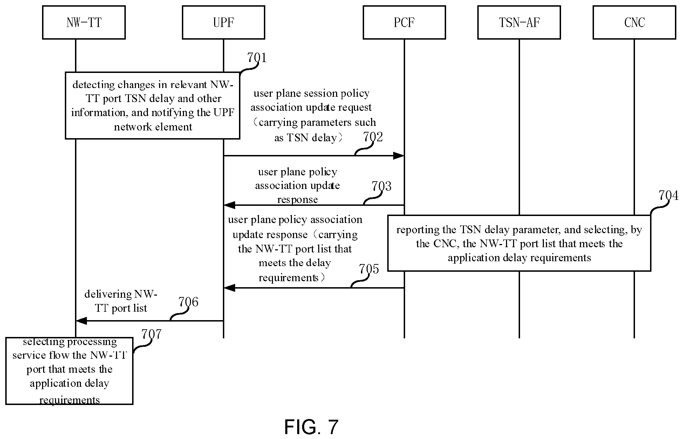

In an example, the user plane TSN delay change processing flow is shown in FIG. 7. The specific process is as follows.

Step 701, detecting, by the NW-TT network element, changes in relevant NW-TT port TSN delay and other information, and notifying the UPF network element.

Step 702, initiating, by the UPF network element, a user plane session policy association update request to the PCF network element, carrying parameters such as TSN delay.

Step 703, replying, by the PCF network element, with a user plane policy association update response.

Step 704, reporting, by the PCF network element, the TSN delay parameter to the CNC through TSN-AF, and selecting, by the CNC, the NW-TT port list that meets the application delay requirements.

Step 705, initiating, by the PCF network element, a user plane policy association notification request to the UPF network element, carrying the NW-TT port list and other information that meets the delay requirements.

Step 706, delivering, by the UPF network element, the NW-TT port list to the NW-TT.

Step 707, selecting, by the NW-TT network element, an NW-TT port that meets the application delay requirement to process the service flow.

The methods provided by the embodiments of the present application can be used for independent slice delay critical and delay determination applications such as smart grids, industrial control, mines, remote healthcare, Internet of Things, and Internet of Vehicles.

The user plane policy authorization method provided by the embodiment of the present application involves modifying the protocol standard specification. The SMF network element carries the identity of the PCF to the UPF network element. After the UPF network element delivers the relevant information of the PCF instance to the NRF network element through the identity of the PCF, the UPF network establishes a user plane association session with the PCF instance. This session can transmit the occurrence and stop of application detection, usage accumulation information reporting, and key delay parameter reporting. The PCF makes decisions on policies such as QoS, usage monitoring and delay key according to this information.

The division of steps in the various methods above is only for the purpose of clear description. During implementation, the steps can be combined into one step or some steps can be split into multiple steps. As long as they include the same logical relationship, they are all within the scope of the present application. Adding insignificant modifications or introducing insignificant designs to the algorithm or process, but not changing the core design of the algorithm and process, are within the scope of the present application.

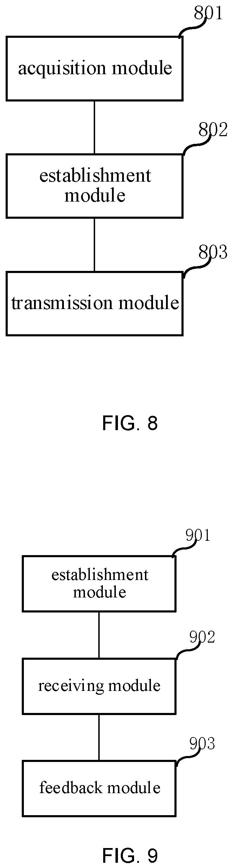

The embodiment of the present application also relates to a UPF network element, as shown in FIG. 8, including: an acquisition module 801, a establishment module 802 and a transmission module 803.

Specifically, the acquisition module 801 is configured to acquire the identity of the PCF network element from the SMF network element. The establishment module 802 is configured to establish an association session with the PCF network element according to the identity of the PCF network element. The transmission module 803 is configured to report an user plane usage information to the PCF network element through the association session, and receive the user plane policy fed back based on the user plane usage information from the PCF network element through the association session.

In an example, when the UPF network element creates an N4 session with the SMF, the acquisition module 801 acquires the PCF identity selected by the SMF. The above PCF identity is used for subsequent direct communication between the UPF network element and the PCF network element.

In an example, the UPF network element acquires the identity of the PCF network element through the corresponding relationship between the identity of the PCF network element and the link establishment information stored in the NRF network element, and then the establishment module 802 establishes an association session with the PCF network element according to the link establishment information of the PCF network element. The link establishment information includes: FQDN, IP address, port and other information.

In an example, the corresponding relationship between the identity and the link establishment information of the PCF network element is stored in local configuration information in advance. After acquiring the identity of the PCF network element, the UPF network element acquires the link establishment information of the PCF network element through the corresponding relationship in the local configuration information, thereby establishing the association session with the PCF network element.

In an example, after the UPF network element detects that the application occurs, the transmission module 803 reports the user plane usage information to the PCF. The PCF decides the user plane policy for the application according to the user plane usage information, and sends the user plane decision to the UPF for execution.

The embodiment of the present application provides the UPF network element, and establishes the association session with the PCF network element through the acquired identity of the PCF network element, so that the UPF network element can report the user plane usage information to the PCF network element, realizing the direct interaction between the UPF network element and the PCF network element, reducing the information transmission path, reducing the load between systems, reducing the processing time of business applications, effectively improving the business application processing capabilities of the 5GS system, and enhancing the user's business experience. This achieves the purpose of quickly acquiring the required application policy.

It is not difficult to find that this implementation mode is a device embodiment corresponding to the above-mentioned embodiment of the user plane policy authorization method applied to the UPF network element. This implementation mode can cooperate with the above-mentioned embodiment of the user plane policy authorization method applied to the UPF network element. The relevant technical details mentioned in the above embodiment of the user plane policy authorization method applied to the UPF network element are still valid in this implementation mode, and will not be described again in order to reduce duplication. Correspondingly, the relevant technical details mentioned in this implementation mode can also be applied to the above embodiment of the user plane policy authorization method applied to the UPF network element.

The embodiment of the present application also relates to a PCF network element, as shown in FIG. 9, including: an establishment module 901, a receiving module 902 and a feedback module 903.

Specifically, the establishment module 901 is configured to receive an association session establishment request initiated by the UPF network element, and establish the association session with the UPF network element. The receiving module 902 is configured to receive the user plane usage information reported by the PCF network element through the association session. The feedback module 903 is configured to deliver a user plane policy fed back based on user plane usage information to the PCF network element through the association session.

In an example, the feedback module 903 responds to the user plane association session establishment response and carries the monitoring policy of the relevant application. The monitoring policy includes: the application to be monitored and the monitoring QoS information and other policies. After receiving the monitoring policy of the application, the UPF network element executes the monitoring policy.

In an example, the feedback module 903 determines the most appropriate user plane policy for execution by the UPF gateway according to the received user plane usage information.

The PCF network element in the embodiment of the present application directly receives the user plane usage information uploaded by the UPF network element through the association session created with the UPF network element, and delivers the user plane policy for user plane execution. Moreover, after receiving the user plane usage information reported by the UPF network element, the PCF network element can decide the application policy required by the UPF network element quickly through independent decision-making or interactive decision-making between network elements, which reduces the information transmission path reduces the load between systems, reduces the processing time of business applications, can effectively improve the business application processing capabilities of the 5GS system and improve the user's business experience.

It is not difficult to find that this implementation mode is a device embodiment corresponding to the above-mentioned embodiment of the user plane policy authorization method applied to the PCF network element. This implementation mode can cooperate with the above-mentioned embodiment of the user plane policy authorization method applied to the PCF network element. The relevant technical details mentioned in the above embodiment of the user plane policy authorization method applied to the PCF network element are still valid in this implementation mode, and will not be described again in order to reduce duplication. Correspondingly, the relevant technical details mentioned in this implementation mode can also be applied to the above embodiment of the user plane policy authorization method applied to the PCF network element.

It is worth mentioning that each module involved in the above-mentioned embodiments of the present application is a logical module. In practical applications, a logical unit can be a physical unit, or a part of a physical unit, or a combination of multiple physical units. In addition, in order to highlight the innovative part of the present application, units that are not closely related to solving the technical problems raised in the present application are not introduced in this embodiment, but this does not mean that other units do not exist in this embodiment.

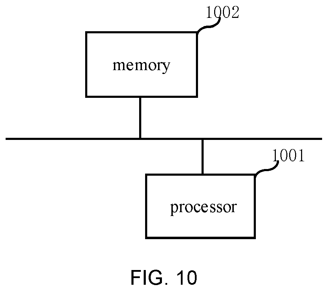

An embodiment of the present application also provides an electronic device, as shown in FIG. 10, including at least one processor 1001, and a memory 1002 communicated with the at least one processor 1001. The memory 1002 stores an instruction that can be executed by the at least one processor 1001, the instruction are executed by the at least one processor 1001, so that the at least one processor can execute the above user plane policy authorization method applied to the UPF network element, or can execute the above user plane policy authorization method applied to the PCF network element.

The memory and the processor are connected using a bus. The bus can include any number of buses and bridges interconnected and connects various circuits of one or more processors and the memory together. The bus can also connect various other circuits such as peripheral devices, voltage regulators, and power management circuits together, which are all well known in the art and therefore will not be described further herein. The bus interface provides the interface between the bus and the transceiver. The transceiver can be one element or multiple elements, such as multiple receivers and transmitters, providing a unit for communicating with various other devices over a transmission medium. The data processed by the processor is transmitted over the wireless medium through the antenna. In an embodiment, the antenna also receives the data and transmits the data to the processor.

The processor is responsible for managing the bus and general processing, and can also provide a variety of functions, including timing, peripheral interfaces, voltage regulation, power management, and other control functions. The memory can be used to store data used by the processor when performing operations.

The above-mentioned products can perform the methods provided in the embodiments of the present application and have the corresponding functional modules and functions for performing the methods. For technical details not described in detail in this embodiment, please refer to the methods provided in the embodiments of the present application.

Embodiments of the present application also provide a computer-readable storage medium on which a computer program is stored. The above embodiments of the method are implemented when the computer program is executed by the processor.

Those skilled in the art can understand that all or part of the steps in the methods of the above embodiments can be completed by instructing relevant hardware through a program. The program is stored in a storage medium and includes several instructions to cause a device (which can be a microcontroller, a chip, etc.) or a processor to perform all or part of the steps of the methods described in various embodiments of the present application. The aforementioned storage media include: U disk, mobile hard disk, read-only memory (ROM), random access memory (RAM), magnetic disk or optical disk and other media that can store program code.

The above embodiments are provided for those skilled in the art to implement and use the present application. Those skilled in the art can make various modifications or changes to the above embodiments without departing from the inventive concept of the present application. Therefore, the scope of the present application is not limited to the above embodiments, but is to be accorded the widest scope consistent with the inventive features claimed herein.

## Claims

1. A user plane policy authorization method, applied to a user plane function (UPF) network element, **characterized by** comprising:
acquiring an identity of a policy control function (PCF) network element from a session management function (SMF) network element;
establishing an association session with the PCF network element according to the identity of the PCF network element; and
reporting user plane usage information to the PCF network element through the association session, and receiving a user plane policy fed back based on the user plane usage information from the PCF network element through the association session.

2. The user plane policy authorization method according to claim 1, wherein establishing the association session with the PCF network element according to the identity of the PCF network element comprises:
sending the identity of the PCF network element to a network repository function (NRF), for the NRF to query link establishment information of the PCF network element based on the identity of the PCF network element; and
receiving the link establishment information of the PCF network element fed back by the NRF, and establishing the association session with the PCF network element according to the link establishment information of the PCF network element.

3. The user plane policy authorization method according to claim 1, wherein establishing the association session with the PCF network element according to the identity of the PCF network element comprises:
querying link establishment information of the PCF network element corresponding to the identity in local configuration information according to the identity of the PCF network element, wherein the local configuration information comprises a corresponding relationship between the link establishment information of the PCF network element and the identity of the PCF network element; and
establishing the association session with the PCF network element according to the queried link establishment information.

4. The user plane policy authorization method according to claim 1, wherein acquiring the identity of the PCF network element from the SMF network element comprises:
receiving an N4 session establishment request initiated by the SMF network element, wherein the N4 session establishment request carries the identity of the PCF network element; and
parsing the N4 session establishment request to obtain the identity of the PCF network element.

5. The user plane policy authorization method according to any one of claims 1 to 4, wherein:
the user plane usage information comprises one of application occurrence information, usage accumulation information and time sensitive networking (TSN) delay parameter information, or any combination thereof; and
the fed back user plane policy comprises one of quality of service (QoS) policy, usage monitoring policy and delay critical policy, or any combination thereof.

6. A user plane policy authorization method, applied to a policy control function (PCF) network element, **characterized by** comprising:
receiving an association session establishment request initiated by a user plane function (UPF) network element, and establishing an association session with the UPF network element;
receiving user plane usage information reported by the PCF network element through the association session; and
delivering a user plane policy fed back based on the user plane usage information to the PCF network element through the association session.

7. The user plane policy authorization method according to claim 6, wherein receiving the association session establishment request initiated by the UPF network element and establishing the association session with the UPF network element comprises:
receiving the association session establishment request initiated by the UPF network element; and
sending an association session creation response to the UPF network element, wherein the association session creation response carries a monitoring policy for the UPF network element to report the user plane usage information based on the monitoring policy.

8. A user plane function (UPF) network element, **characterized by** comprising:
an acquisition module, configured to acquire an identity of a policy control function (PCF) network element from a session management function (SMF) network element;
an establishment module, configured to establish an association session with the PCF network element according to the identity of the PCF network element; and
a transmission module, configured to report user plane usage information to the PCF network element through the association session, and receive a user plane policy fed back based on the user plane usage information from the PCF network element through the association session.

9. A policy control function (PCF) network element, **characterized by** comprising:
an establishment module, configured to receive an association session establishment request initiated by a user plane function (UPF) network element, and establish an association session with the UPF network element;
a receiving module, configured to receive user plane usage information reported by the PCF network element through the association session; and
a feedback module, configured to deliver a user plane policy fed back based on the user plane usage information to the PCF network element through the association session.

10. An electronic device, **characterized by** comprising:
at least one processor; and
a memory communicated with the at least one processor;
wherein an instruction executable by the at least one processor is stored in the memory and is executed by the at least one processor to allow the at least one processor to perform the user plane policy authorization method according to any one of claims 1 to 5, or to perform the user plane policy authorization method according to claim 6 or 7.

11. A computer-readable storage medium, **characterized in that** a computer program is stored in the computer-readable storage medium, wherein when the computer program is executed by a processor, the user plane policy authorization method according to any one of claims 1 to 5 is implemented, or the user plane policy authorization method according to claim 6 or 7 is implemented.
